# EUROPÄISCHE PATENTSCHRIFT

(11) **EP 1 951 557 B1**
(45) Veröffentlichungstag und Bekanntmachung des Hinweises auf die Patenterteilung: **19.10.2011**
(21) Anmeldenummer: 06818731.9
(22) Anmeldetag: 22.11.2006
(51) Int. Cl.: B60R 21/13, B60R 19/42

(54) **SICHERHEITSSYSTEM**
SAFETY SYSTEM
SYSTEME DE SECURITE

(30) Priorität: 23.11.2005 DE 102005056134
(43) Veröffentlichungstag der Anmeldung: 06.08.2008
(73) Patentinhaber: AUTOLIV DEVELOPMENT AB, 447 83 Vargarda (SE)
(72) Erfinder: PIPKORN, Bengt, S-433 70 Sävedalen (SE)
(74) Vertreter: Stornebel, Kai
(86) Internationale Anmeldenummer: PCT/EP2006/011185
(87) Internationale Veröffentlichungsnummer: WO 2007/059934

(56) Entgegenhaltungen:
- WO-A-96/22199
- DE-A1- 2 020 360
- DE-A1- 2 041 741
- DE-A1- 10 203 287
- DE-A1- 19 853 165
- DE-C- 836 748
- US-A1- 2004 049 331

## Beschreibung

Die Erfindung betrifft ein Sicherheitssystem für Kraftfahrzeuge mit Sensoreinrichtungen zum Erfassen eines Unfalles und einer Vorrichtung zum Versteifen einer als A-, B- oder C-Säule ausgebildeten Tragkonstruktion eines Kraftfahrzeuges, die über eine Unterkante einer Fensteröffnung hinausragt.

Bei einem Fahrzeugüberschlag werden insbesondere die Tragkonstruktionen des Daches, insbesondere die A-Säule stark belastet. Als Folge davon verbiegen sich die A-Säulen in Richtung auf eine Fensterunterkante oder das Fahrzeugchassis, so dass das Fahrzeugdach in Richtung auf den Fahrzeuginsassen verlagert wird. Dies kann zu einer Beeinträchtigung des Überlebensraumes innerhalb der Fahrgastzelle führen,

Bei der Entwicklung und Gestaltung von Dachtragkonstruktionen wie A-Säulen müssen eine Vielzahl einander widersprechender Anforderungen erfüllt werden. Die Tragkonstruktionen müssen ausreichend steif sein, um einen guten Schutz für die Fahrzeuginsassen bei einem Fahrzeugüberschlag bereitzustellen, gleichzeitig müssen sie dünn genug sein, um eine gute Sicht für den Fahrzeugnutzer auf die Umgebung bereitzustellen. Ebenfalls ist es im Hinblick auf einen vergrößerten Gestaltungsfreiraum wünschenswert, dass die Tragkonstruktionen, also die A-, B- oder C-Säulen, nicht zu dick ausgelegt werden müssen,

Aus der FR 2,814,411 sind Verstärkungsbolzen für eine A-Säule in einem Kraftfahrzeug bekannt, die mit einem Steuerungssystem und einem pyrotechnischen Treibsatz verbunden sind. Bei einem Überschlag werden die pyrotechnischen Treibsätze aktiviert und die Verstärkungsbolzen drehen sich über einen Hebelmechanismus in die Hohlräume innerhalb der A-Säule.

Nachteilig hieran sind das Extragewicht und der benötigte Raum innerhalb der A-Säule zur Unterbringung des Verstärkungsbolzens.

Auch bei anderen Tragkonstruktionen an der Fahrzeugstruktur finden sich ähnliche Belastungsszenarien wieder.

Die DE 836 748 C1 beschreibt eine Sicherheitsanordnung für Insassen in Fahrzeugen, bei der die Wände, die Decke und besonders Kanten und vorspringende Teile im Fahrzeuginneren mit einer luftkissenartigen Polsterung ausgekleidet sind. Die Polsterung kann in einzelne Felder unterteilt sein, deren luftgefüllte Hohlräume miteinander in Verbindung stehen. Zwischen einzelnen Luftkissen können Ventile vorgesehen sein, die bei Überschreiten eines bestimmten Druckabfalls geschlossen werden.

Die DE 20 41 741 A1 beschreibt eine Sicherheitsvorrichtung für Fahrzeuge mit einer Druckmittelquelle und einem zusammengefalteten Luftkissen, das bei einer Kollision über die Druckmittelquelle aufblasbar ist. Das Luftkissen erstreckt sich quer von oben vor die Vorder- oder Hintersitze im Bereich des Daches oder der Dach- und Türpfosten, so dass die Aufblasrichtung des Luftkissens auf den Körperschwerpunkt des jeweiligen Fahrzeuginsassen gerichtet ist.

Die DE 198 53 165 A1 beschreibt eine Knautschzone, die zur Dämmung der Aufprallenergie eines Kraftfahrzeuges dient und an dem Fahrzeug angebracht ist, Die Knautschzone kann beweglich sein, so dass sie heraus- oder hineingefahren werden dann.

Die DE 102 03 287 A1 beschreibt eine Sicherheitsvorrichtung für ein Fahrzeug mit wenigstens zwei Airbags, die mittels wenigstens einer Gasquelle aufblasbar sind. Ein Gasverteiler ist zwischen den beiden Airbags angeordnet, über den ein Gasstrom in Abhängigkeit von ermittelten Crashparametern mit einer Steuereinrichtung gesteuert in wenigstens einen der Airbags verteilbar ist. Die Airbags sind außerhalb und innerhalb des Fahrzeugs angeordnet.

Die DE 20 20 360 A1 beschreibt ein Kraftfahrzeug mit mehreren sich automatisch aufblasenden Luftbälgen, die im aufgeblasenen Zustand bei Zusammenstößen den

Fahrzeugkörper durch Aufzehrung von Stoßenergie außerhalb des Fahrzeuges schützen. Dadurch sollen nicht nur Schäden am Fahrzeug selbst vermieden werden, sondern auch wirkungsvoll Schäden von den Fahrzeuginsassen abgewendet werden.

Die US 2004/0049331 A1 beschreibt ein Fahrzeugsicherheitssystem mit innerhalb und außerhalb des Fahrzeugs angeordneten faltbaren Airbags zur Bereitstellung von Energieabsorption als Reaktion auf eine Kollision.

Die WO 96/22199 A1 beschreibt einen aufblasbaren, metallischen Ballon, der über einen Gasgenerator befüllt und aufgeblasen wird. Der Metallballon dient als Schutz gegen einen Seitenaufprall. Aufgrund der hohen Wärmeleitfähigkeit des Metallballons ist es möglich, in Gasgeneratoren Zusammensetzungen zu verwenden, die eine hohe Gastemperatur aufweisen, so dass der Ballon sehr schnell aufgeblasen werden kann. Der Metallballon kann sich neben den Fahrzeuginsassen oder innerhalb einer Fahrzeugtür entfalten. Bei einer Entfaltung innerhalb der Fahrzeugtür wird die Fahrzeugtür in der Regel zerstört. Ebenfalls ist vorgesehen, den metallischen Ballon in Gestalt der Stoßstange auszubilden, diese im Falle eines Unfalles aufzublasen und zu vergrößern.

Aufgabe der vorliegenden Erfindung ist es, ein Sicherheitssystem bereitzustellen, das bei der Konstruktion der Tragkonstruktionen einen ausreichenden Spielraum bei gleichzeitiger ausreichender Steifigkeit gewährleistet.

Erfindungsgemäß wird diese Aufgabe dadurch gelöst, dass an der Tragkonstruktion ein aufblasbares Versteifungselement befestigt oder ausgebildet ist, das bei Vorliegen entsprechender Sensordaten über einen Gasgenerator mit Gas befüllbar ist und sich zur Erhöhung des Trägheits- und Widerstandsmomentes der Tragkonstruktion entfaltet. Um bei einem unbeabsichtigten Auslösen des Gasgenerators und dem sich daran anschließenden Entfalten der Versteifungselemente diese ersetzen zu können, ist vorgesehen, dass das Versteifungselement in einer Aufnahme an der Tragkonstruktion oder Fahrzeugstruktur befestigt ist. Eine einfache Realisierung der Befestigung sieht vor, dass die Aufnahme als eine Nut oder Schiene ausgebildet ist, in die das Versteifungselement eingeschoben, eingeklemmt, aufgeschoben oder aufgeklemmt ist.

Weiterbildungen der Erfindung sind in den Unteransprüchen beschrieben.

Es ist möglich, das Versteifungselement reversibel an der Fahrzeugstruktur festzulegen, indem das Versteifungselement über ein daran ausgebildetes oder befestigtes Kopplungselement an der Fahrzeugstruktur verankert wird. Das Kopplungselement weist dazu Formschlusselemente auf, die korrespondierend zu Formschlusselementen in oder an der Aufnahme ausgebildet sind, so dass eine sichere Festlegung des Versteifungselementes ohne aufwendige Montage erfolgen kann.

Durch das aufblasbare Versteifungselement wird der Querschnitt der Tragkonstruktion, insbesondere der A-Säule, vergrößert, so dass sich die Steifigkeit aufgrund der Erhöhung Trägheits- und Widerstandsmomente erhöht, was dazu führt, dass insbesondere der obere, dem Dach zugewandte Teil der A-Säule nicht oder weniger verformt wird. Auf diese Art und Weise ist es möglich, die Dicke der A-Säule oberhalb der Fenster- oder Frontscheibenunterkante bei einem normalen Fahrbetrieb relativ schmal zu halten, während beim Überschlag die Versteifungswirkung auftritt. Die aufblasbaren und entfaltbaren oder entrollbaren Versteifungselemente stellen ebenfalls einen verbesserten Schutz bei einem Front- oder Seitenaufprall ohne einen Überschlag bereit. Alternativ kann sich das Versteifungselement nach außen stülpen und dadurch den Profilquerschnitt der Tragkonstruktion erhöhen, was ebenfalls zu einer Erhöhung der Trägheits- und Widerstandsmomente führt.

Die Versteifungselemente sind in einer bevorzugten Ausgestaltung in Fahrtrichtung vor und/oder seitlich an der Tragkonstruktion befestigt und dort bevorzugt in einem unteren Bereich der Tragkonstruktion, also in dem Bereich des Überganges von dem Fahrzeugchassis zu dem Fenster oder der Windschutzscheibe, da dort bei einem Überschlag die höchste Belastung zu erwarten ist. Alternativ sind die Versteifungselemente nach innen eingedrückte oder eingeklappte Sicken oder Falze, die durch einen erhöhten Innendruck nach außen gestülpt werden und dadurch den Querschnitt des Hohlprofiles, das das Versteifungselement oder die A-Säule bildet, vergrößert. Durch den vergrößerten Querschnitt und das erhöhte Volumen wird die Steifigkeit erhöht.

Das Versteifungselement besteht bevorzugt aus einem Blechkörper, das gefaltet oder gerollt an der Tragkonstruktion befestigt ist, bevorzugt an der Außenseite oder den Außenseiten der Tragkonstruktion. Das Versteifungselement kann ziehharmonikaartig gefaltet sein, so dass es sich bei der Entfaltung im Wesentlichen in einer Ebene ausdehnt, bei einer einseitig starren Festlegung an einer Fahrzeugstruktur wird sich das Versteifungselement nur in eine Richtung entfalten, nämlich in die der Fahrzeugstruktur abgewandten Richtung. Neben einer Zusammenfaltung oder einer sonstigen Kompaktierung zur Entfaltung in einer Richtung oder Dimension ist es vorgesehen, dass das Versteifungselement als aufblasbares Kissen ausgebildet ist, das sich in mehrere Richtungen entfaltet. Dadurch werden die Widerstands- und Trägheitsmomente in mehreren Richtungen oder Orientierungen erhöht, so dass eine Versteifung und Stabilitätserhöhung nicht nur in einer Belastungsrichtung erfolgt. Eine Volumenvergrößerung des Versteifungselementes tritt bei Zündung des Gasgenerators auf.

Das Versteifungselement kann sich im aufgeblasenen Zustand zwischen der Unterkante der Fensteröffnung und der Tragkonstruktion erstrecken und weist im aufgeblasenen Zustand einen gegenüber dem nicht aufgeblasenen Zustand vergrößerten, insbesondere verdoppelten Querschnitt auf.

Der Gasgenerator kann an jedem beliebigen Ort innerhalb der Fahrzeugkonstruktion angeordnet sein, vorzugsweise ist er innerhalb der Tragkonstruktion oder unmittelbar in der Nähe des Versteifungselementes, unterhalb der Unterkante der Fensteröffnung angeordnet, beispielsweise im unteren Bereich der A-, B- oder C-Säule unterhalb der Fensteröffnung.

Der Gasgenerator kann als pyrotechnischer Treibsatz oder als Gasspeicher für ein komprimiertes Gas ausgebildet sein und wird bei Vorliegen eines Unfalles oder bei Sensierung eines unmittelbar bevorstehenden Unfalles aktiviert. Dazu ist es vorgesehen, dass die Sensoreinrichtung als eine sogenannte pre-crash-Sensoreinrichtung ausgebildet ist, die ein sich schnell näherndes Objekt detektiert und die Treibsätze für den Gasgenerator zündet.

Ein Ausführungsbeispiel der Erfindung ist anhand der beigefügten Figuren näher erläutert. Es zeigen:
- Figur 1 -: eine schematische Darstellung einer herkömmlichen Tragkonstruktion in einem Kraftfahrzeug in einer Ausgangsstellung;
- Figur 2 -: eine Tragkonstruktion gemäß Figur 1 in einem deformierten Zustand;
- Figur 3 -: eine Tragkonstruktion in schematischer Darstellung mit einem aufgeblasenen Versteifungselement vor einer Deformation;
- Figur 4 -: eine Tragkonstruktion gemäß Figur 3 nach der Deformation;
- Figur 5 -: eine Einbausituation eines Versteifungselementes.

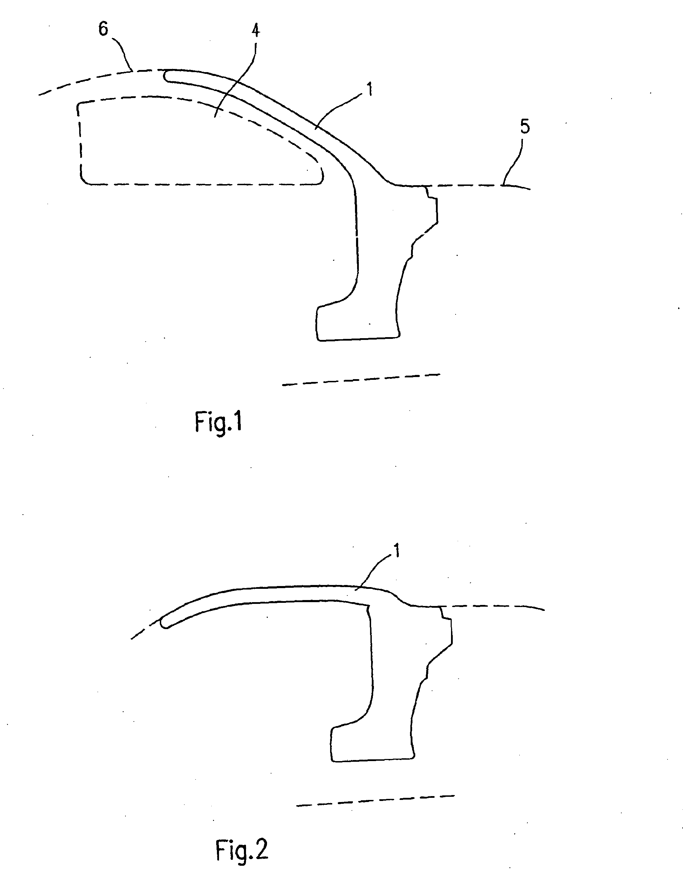

In der Figur 1 ist in schematischer Darstellung eine Tragkonstruktion 1 in Gestalt einer sogenannten A-Säule gezeigt. Als A-Säule 1 wird die Verbindung zwischen einem Fahrzeugdach und der Motorhaube im vorderen Bereich einer Fahrgastzelle genannt. Die A-Säule 1 kann sich bis weit unterhalb der Motorhaube bis zu dem Fahrzeugchassis erstrecken.

Neben der A-Säule sind weitere Tragkonstruktionen in einem herkömmlichen Kraftfahrzeug vorgesehen, beispielsweise die B-Säule, die eine Verbindung zwischen dem Fahrzeugboden und dem Fahrzeugdach in der Mitte der Fahrgastzelle bildet. Manche Fahrzeugtypen, z. B. Coupes oder Cabriolets, besitzen in der Regel keine B-Säule. Eine C-Säule ist eine Verbindung zwischen dem Fahrzeugdach und den hinteren Kotflügeln oder Kofferraumdeckeln am Fahrzeugheck; allen Tragkonstruktionen oder Fahrzeugsäulen kommt im Falle eines Unfalles mit Überschlag die lebenserhaltende Aufgabe zu, die Fahrgastzelle gegen vertikale Verformungen zu stabilisieren. Darüber hinaus müssen diese Fahrzeugsäulen Kräfte beim Seitenaufprall aufnehmen.

Wie in der Figur 1 gezeigt, erstreckt sich die A-Säule 1 von der angedeuteten Motorhaube bis zu dem angedeuteten Fahrzeugdach 6. Dabei bildet die A-Säule 1 entweder den vorderen Teil eines Fensterausschnittes 4 oder den Anschlag für einen Fensterrahmen mit einem Fensterausschnitt 4, der an der Fahrzeugtür befestigt ist.

Bei einem Unfall mit einem Überschlag können sehr hohe Vertikalkräfte auf die A-Säule 1 wirken. Überschreiten diese Kräfte ein gewisses Maß, versagt die Tragkonstruktion 1 und knickt ein, so dass eine Verringerung des Raumes innerhalb der Fahrgastzelle eintritt. Ein solches Abknicken findet in der Regel am Fuße der A-Säule 1 am Übergang von dem Fensterausschnitt 4 zu dem unterhalb der Motorhaube 5 sich erstreckenden Abschnitt der Tragkonstruktion 1 statt. Dort sind die auftretenden Momente aufgrund des Hebelarms besonders groß, so dass hier eine erhöhte Versagenswahrscheinlichkeit vorliegt.

In der Figur 2 ist eine A-Säule 1 nach einer Deformation gezeigt, die eine massive Verringerung der Höhe der Fahrgastzelle zur Folge hatte. Die A-Säule 1 ist dabei ungefähr in Höhe der Motorhaube 5 abgeknickt, so dass die Fahrgastzelle nur bis ungefähr zum Bereich der Fensterbrüstung besteht.

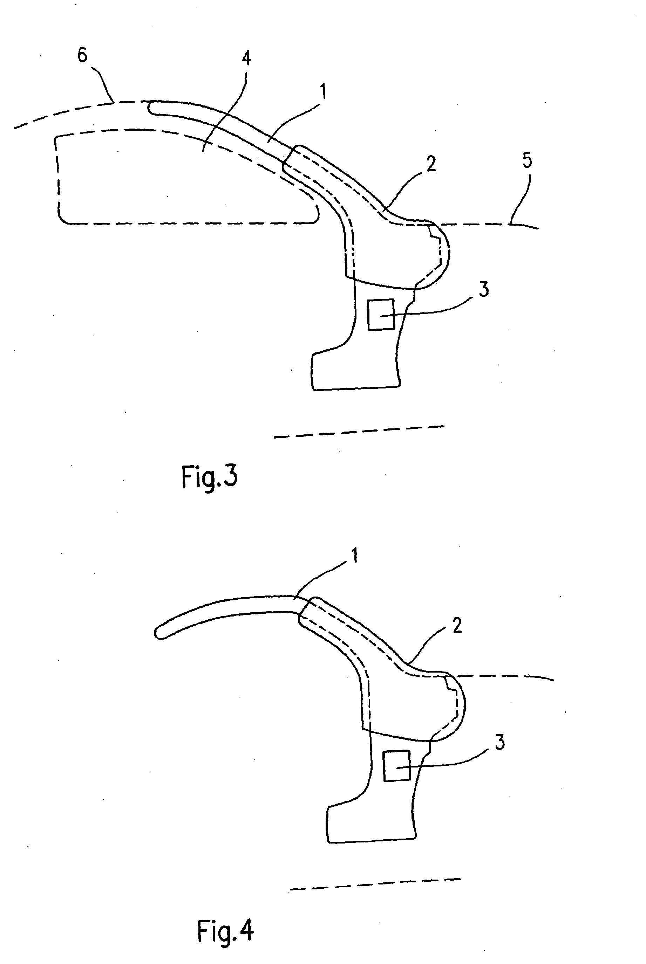

Die Figur 3 zeigt das erfindungsgemäße Sicherheitssystem mit einer Tragkonstruktion 1, bei der im unteren Bereich, unterhalb der Motorhaube 5, ein Gasgenerator angeordnet ist. Im Übergangsbereich von dem unterhalb der Motorhaube 5 angeordneten Abschnitt zum Verbindungssteg zum Fahrzeugdach 6 ist ein aufblasbares Versteifungselement 2 angeordnet, das im aktivierten Zustand gezeigt ist. Während das Versteifungselement 2 im nicht aktivierten Zustand der üblichen, durch die Punktlinien dargestellten Form entspricht, entfaltet sich das Versteifungselement 2 nach der Aktivierung des Gasgenerators 3 und stellt einen vergrößerten Querschnitt des Versteifungselementes 1 bereit. Diese Querschnittsvergrößerung führt zu einem vergrößertem Trägheit- und Widerstandsmoment der in der Regel als Hohlprofil ausgebildeten Tragkonstruktion 1, so dass insgesamt eine Festigkeitserhöhung und eine verbesserte Steifigkeit der Konstruktion erzielt werden können.

In der Figur 4 ist die Deformation einer solcher Art versteiften Tragkonstruktion 1 gezeigt. Es ist zu erkennen, dass eine Deformation erst am oberen Ende des Versteifungselementes 2 beginnt, so dass die Fahrgastzelle in Vertikalrichtung gegenüber einer herkömmlichen Konstruktion vergrößert erhalten bleibt. Das Versteifungselement 2 kann die Tragkonstruktion 1 umgeben oder aber in Fahrtrichtung vor oder seitlich neben der Tragkonstruktion 1 angeordnet sein. Ebenfalls ist es möglich, das Versteifungselement 2 so anzuordnen, dass es sich in einem Fensterausschnitt 4 im vorderen Türbereich erstreckt und so eine Abstützung der Tragkonstruktion 1 bewirkt. Wichtig dabei ist, dass das Versteifungselement 2 im unteren Bereich der Tragkonstruktion 1, also im Bereich des Überganges von der Motorhaube 5 in die Verbindungsstrebe zur Dachkonstruktion 1 angeordnet ist, also im Bereich der Unterkante der Fensteröffnung 4, da dort die höchsten Biegemomente aufgrund des Hebelarmes der A-Säule 1 auftreten.

Aus Platz- und Gewichtsverteilungsgründen ist der Gasgenerator 3 unterhalb der Motorhaube 5 innerhalb der als Hohlprofil ausgebildeten Tragkonstruktion 1 angeordnet. Der Gasgenerator 3 ist insbesondere als ein pyrotechnischer Treibsatz oder als ein Gasspeicher für komprimiertes Gas ausgebildet und wird durch Sensoreinrichtungen, insbesondere Pre-Crash-Sensoreinrichtungen, aktiviert. Nach Aktivierung des Gasgenerators 3 vergrößert sich der Querschnitt des Versteifungselementes 2 und damit der Tragkonstruktion 1 gegenüber dem nicht aufgeblasenen Zustand, bevorzugt wird der Querschnitt verdoppelt. Das Versteifungselement 2 kann an der Tragkonstruktion 1 angeschweißt sein und aus einem gefalteten Metallkissen oder einer Sicke bestehen, die nach außen gedrückt wird und so die Fläche des Tragquerschnittes der Tragkonstruktion 1 erhöht. Auf diese Weise wird sichergestellt, dass im Normalbetrieb eine möglichst schlanke Silhouette der Tragkonstruktion 1 gewährleistet bleibt, so dass minimale Sichtfeldeinschränkungen auftreten. Im Falle eines Unfalles werden dann die nach innen gefalteten Sicken oder Bestandteile der A-Säule 1 nach außen gestülpt oder die gefalteten Kissen aufgeblasen, um den Querschnitt der Tragkonstruktion 1 und des Versteifungselementes 2 zu erhöhen und dadurch eine Versteifung zu bewirken.

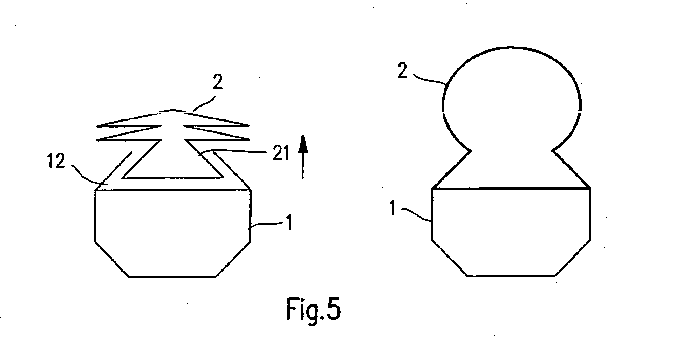

In der Figur 5 ist in einer Querschnittsdarstellung eine Einbausituation eines Versteifungselementes 2 an einer Tragkonstruktion 1 bzw. Fahrzeugstruktur 1 dargestellt. Die Fahrzeugstruktur 1 ist als eine A-Säule ausgebildet, an der an der in Fahrtrichtung abgewandten Seite eine Aufnahme 12 in Gestalt einer trapezförmig ausgebildeten Schiene angeordnet oder ausgebildet ist. Diese Aufnahme 12 weist einen Hinterschnitt als ein Formschlusselement auf, das zur Aufnahme des Versteifungselementes 2 dient. An dem Versteifungselement 2 ist ein Kopplungselement 21 ausgebildet oder befestigt, das korrespondierend zu der Aufnahme 12 ausgebildet ist. Das Versteifungselement 2 wird mit dem Kopplungselement 21 entlang der Längserstreckung der Fahrzeugstruktur 1 bzw. A-Säule in die Aufnahme 12 eingeschoben und durch die Querschnittsgestaltung sowohl der Aufnahme 12 als auch des Kopplungselementes 21 formschlüssig in Entfaltungsrichtung gehalten. Gegen eine Verschiebung des Versteifungselementes 2 entlang der Längserstreckung der A-Säule 1 bzw. Aufnahme 12 kann ein gesondertes Befestigungs- oder Fixierelement vorgesehen sein. In der Figur 5 ist die Einbausituation schematisch dargestellt, in der tatsächlichen Einbaulage ist zwischen dem Kopplungselement 21 und der Aufnahme 12 kein oder nur ein sehr geringes Spiel vorhanden.

Nach dem Zünden des Gasgenerators wird das Versteifungselement 2 mit Gas gefüllt und der gefaltete Bereich erfährt eine Volumenvergrößerung, so dass eine Kontur erzielt wird, die in der rechten Darstellung der Figur 5 zu entnehmen ist. Das Versteifungselement 2 weist dann einen teilkreisförmigen Abschnitt mit einem sich darin erstreckenden trapezförmigen Abschnitt auf. Durch die Volumenvergrößerung erfolgt eine Vergrößerung der Trägheits- und Widerstandsmomente und eine Versteifung der Fahrzeugstruktur 1 bzw. der Tragkonstruktion 1. Im entfalteten Zustand hat das Versteifungselement 2 eine schlüssellochartige Kontur, während im zusammengefalteten Zustand das Versteifungselement 2 flach aufeinander gefaltet ist. Eine Ausdehnung erfolgt somit in mehreren Orientierungen, so dass das Versteifungselement 2 als ein aufblasbares Kissen ausgebildet ist. Alternativ dazu kann das Versteifungselement 2 auch ziehharmonikaartig aufeinander gefaltet sein und sich nur ein eine Richtung, vorliegend von der Tragkonstruktion 1 weg in Pfeilrichtung ausdehnen. Dadurch würde vorwiegend eine Erhöhung der Steifigkeit gegen eine Belastung in Pfeilrichtung erfolgen.

Durch die Ausbildung eines Kopplungselementes 21 ist es möglich, das Versteifungselement 2 zur Verbesserung der Steifigkeit und Unfallsicherheit von Fahrzeugen durch Verstärkung bestimmter Teile innerhalb der Fahrzeugstruktur leicht und sicher zu montieren. Die zunächst zusammengelegten, insbesondere gefalteten Versteifungselemente 2 werden durch eine Beaufschlagung mit einem Gasinnendruck entfaltet. Im montierten Zustand sind die Versteifungselemente leicht zu montieren und im Falle eines Auslösens aufgrund der Signale eines Precrash-Sensors ohne nachfolgenden Unfall leicht auszutauschen. Die Erfindung kann an unterschiedlichen Teilen der Fahrzeugstruktur eingesetzt werden, beispielsweise in Türpfosten und insbesondere in Dachträgerkonstruktionen. Im Falle eines Unfalles wird aufgrund der formschlüssigen Aufnahme des Kopplungselementes 21 innerhalb der Aufnahme 12 eine stabile Zuordnung und feste Kopplung mit der Tragkonstruktion 1 erreicht werden. Die feste Kopplung wird durch die Ausdehnung des Versteifungselementes 2 und damit auch des Kopplungselementes 21 im Falle des Auslösens des Gasgenerators verstärkt. Grundsätzlich ist es auch möglich, mit Gasinnendruck beaufschlagte Komponenten wie oben beschrieben an der Fahrzeugstruktur zu befestigen, auch wenn diese sich nicht entfalten und in ihrem Volumen vergrößert werden.

## Patentansprüche

1. Sicherheitssystem für Kraftfahrzeuge mit Sensoreinrichtungen zum Erfassen eines Unfalles und einer Vorrichtung zum Versteifen einer A-, B- oder C-Säule als Tragkonstruktion (1) eines Kraftfahrzeugdaches (6), die über eine Unterkante einer Fensteröffnung (4) hinausragt, mit einem an der Tragkonstruktion (1) befestigten oder ausgebildeten aufblasbaren Versteifungselement (2), das bei Vorliegen entsprechender Sensordaten über einen Gasgenerator (3) mit Gas befüllbar ist und sich zur Erhöhung des Trägheits- und Widerstandsmomentes der Tragkonstruktion (1) entfaltet, **dadurch gekennzeichnet, dass** das Versteifungselement (2) in einer Aufnahme (12) an der Tragkonstruktion (1) befestigt und die Aufnahme (12) als eine Nut oder Schiene ausgebildet ist, in die das Versteifungselement (2) eingeschoben, eingeklemmt, aufgeschoben oder aufgeklemmt ist.

2. Sicherheitssystem nach Anspruch 1, **dadurch gekennzeichnet, dass** das Versteifungselement (2) in Fahrtrichtung vor und/oder seitlich an der Tragkonstruktion (1) befestigt ist.

3. Sicherheitssystem nach Anspruch 1 oder 2, **dadurch gekennzeichnet, dass** das Versteifungselement (2) im unteren Bereich der Tragkonstruktion (1), in dem Bereich der Unterkante der Fensteröffnung (4) befestigt ist.

4. Sicherheitssystem nach einem der voranstehenden Ansprüche, **dadurch gekennzeichnet, dass** das Versteifungselement (2) aus einem Blechkörper besteht, der gefaltet oder gerollt an der Tragkonstruktion (1) befestigt ist.

5. Sicherheitssystem nach einem der voranstehenden Ansprüche, **dadurch gekennzeichnet, dass** das Versteifungselement (2) sich im aufgeblasenen Zustand zwischen der Unterkante der Fensteröffnung (4) und der Tragkonstruktion (1) erstreckt.

6. Sicherheitssystem nach einem der voranstehenden Ansprüche, **dadurch gekennzeichnet, dass** das Versteifungselement (2) an der Außenseite der Tragkonstruktion (1) angeordnet ist.

7. Sicherheitssystem nach einem der voranstehenden Ansprüche, **dadurch gekennzeichnet, dass** das Versteifungselement (2) im aufgeblasenen Zustand einen gegenüber dem nicht aufgeblasenen Zustand vergrößerten Querschnitt aufweist.

8. Sicherheitssystem nach Anspruch 7, **dadurch gekennzeichnet, dass** der Querschnitt im aufgeblasenen Zustand gegenüber dem nicht aufgeblasenen Zustand verdoppelt ist.

9. Sicherheitssystem nach einem der voranstehenden Ansprüche, **dadurch gekennzeichnet, dass** der Gasgenerator (3) innerhalb der Tragkonstruktion (1), insbesondere unterhalb der Unterkante der Fensteröffnung (4), angeordnet ist.

10. Sicherheitssystem nach einem der voranstehenden Ansprüche, **dadurch gekennzeichnet, dass** der Gasgenerator (3) als pyrotechnischer Treibsatz oder Gasspeicher für komprimiertes Gas ausgebildet ist.

11. Sicherheitssystem nach einem der voranstehenden Ansprüche, **dadurch gekennzeichnet, dass** die Sensoreinrichtung als pre-crash-Sensoreinrichtung ausgebildet ist.

## Claims

1. Safety system for motor vehicles with sensor devices for detecting an accident and a device for stiffening a A, B or C pillar as a supporting structure (1) of a motor vehicle roof (6), which protrudes over a lower edge of a window opening with an inflatable stiffening element (2) which is fastened to or formed on the supporting structure (1) and, when corresponding sensor data are present, can be filed with gas via a gas generator (3) and spreads out to increase the moment of inertia and resistance of the supporting structure (1), **characterized in that** the stiffening element (2) is mounted in a holder (12) on the supporting structure (1) and that the holder (12) is configured as a groove or rail, in or on the reinforcing element (2) is inserted, pushed or clamped.

2. Safety system according to Claim 1, **characterized in that** the stiffening element (2) is fastened in front of and/or to the side of the supporting structure (1) in the direction of travel.

3. Safety system according to Claim 1 or 2, **characterized in that** the stiffening element (2) is fastened in the lower region of the supporting structure (1), in the region of the lower edge of the window opening (4).

4. Safety system according to one of the preceding claims, **characterized in that** the stiffening element (2) comprises a sheet-metal body which is fastened to the supporting structure (1) in a folded or rolled manner.

5. Safety system according to one of the preceding claims, **characterized in that** the stiffening element (2), when inflated, extends between the lower edge of the window opening (4) and the supporting structure (1).

6. Safety system according to one of the preceding claims, **characterized in that** the stiffening element (2) is arranged on the outside of the supporting structure (1).

7. Safety system according to one of the preceding claims, **characterized in that** the stiffening element (2), when inflated, has a cross section which is enlarged in comparison to when it is not inflated.

8. Safety system according to Claim 7, **characterized in that** the cross section, when inflated, is twice the size in comparison to when it is not inflated.

9. Safety system according to one of the preceding claims, **characterized in that** the gas generator (3) is arranged within the supporting structure (1), in particular under the lower edge of the window opening (4).

10. Safety system according to one of the preceding claims, **characterized in that** the gas generator (3) is designed as a pyrotechnic propellant or as a gas store for compressed gas.

11. Safety system according to one of the preceding claims, **characterized in that** the sensor device is designed as a pre-crash sensor device.

## Revendications

1. Système de sécurité pour véhicules automobiles, comprenant un moyen capteur pour détecter un accident et un dispositif pour raidir un montant avant milieu ou arrière formant structure porteuse (1) d'un toit de véhicule automobile (6), lequel dispositif dépasse sur un bord inférieur d'une ouverture de fenêtre (4) et comprenant fixé ou formé à la structure porteuse (1) un élément de raidissement (2) gonflable qui, en présence de données de capteur correspondantes, peut être rempli par du gaz par un générateur de gaz (3) et qui se déplie pour augmenter le moment de résistance et d'inertie de la structure porteuse (1), **caractérisé en ce que** l'élément de raidissement (2) est fixé à la structure porteuse (1) dans un logement (12) et le logement (12) est formé par une rainure ou un rail dans lequel ou laquelle l'élément de raidissement (2) est inséré, pincé dedans, enfoncé ou serré par-dessus.

2. Dispositif de sécurité selon la revendication 1, **caractérisé en ce que** l'élément de raidissement (2) est fixé à la structure porteuse (1) dans la direction de la marche à l'avant et/ou latéralement.

3. Dispositif de sécurité selon la revendication 1 ou 2, **caractérisé en ce que** l'élément de raidissement (2) est fixé dans la région inférieure de la structure porteuse (1), dans la région du bord inférieur de l'ouverture de fenêtre (4).

4. Dispositif de sécurité selon l'une quelconque des revendications précédentes, **caractérisé en ce que** l'élément de raidissement (2) consiste en un corps en tôle qui est fixé à la structure porteuse (1) à l'état plié ou roulé.

5. Dispositif de sécurité selon l'une quelconque des revendications précédentes, **caractérisé en ce que** l'élément de raidissement (2) s'étend à l'état gonflé entre le bord inférieur de l'ouverture de fenêtre (4) et la structure porteuse (1).

6. Dispositif de sécurité selon l'une quelconque des revendications précédentes, **caractérisé en ce que** l'élément de raidissement (2) est agencé du côté extérieur de la structure porteuse (1).

7. Dispositif de sécurité selon l'une quelconque des revendications précédentes, **caractérisé en ce que** l'élément de raidissement (2) à l'état gonflé présente une section agrandie relativement à l'état non gonflé.

8. Dispositif de sécurité selon la revendication 7, **caractérisé en ce que** la section à l'état gonflé est doublée relativement à l'état non gonflé.

9. Dispositif de sécurité selon l'une quelconque des revendications précédentes, **caractérisé en ce que** le générateur de gaz (3) est agencé à l'intérieur de la structure porteuse (1), en particulier en-dessous du bord inférieur de l'ouverture de fenêtre (4).

10. Dispositif de sécurité selon l'une quelconque des revendications précédentes, **caractérisé en ce que** le générateur de gaz (3) est formé par une unité propulseuse pyrotechnique ou un accumulateur de gaz pour gaz comprimé.

11. Dispositif de sécurité selon l'une quelconque des revendications précédentes, **caractérisé en ce que** le moyen capteur est formé par un moyen capteur pré-collision.
